# EUROPÄISCHE PATENTSCHRIFT

(11) **EP 2 420 651 B1**
(45) Veröffentlichungstag und Bekanntmachung des Hinweises auf die Patenterteilung: **08.05.2019**
(21) Anmeldenummer: 11175184.8
(22) Anmeldetag: 25.07.2011
(51) Int. Cl.: F01D 25/18, F01D 25/16, F02C 6/12, F16C 17/04, F16C 33/10, F04D 25/04, F04D 29/057

(54) **Lageranordnung für die Verdichterseite eines Turboladers einer Verbrennungskraftmaschine**
Bearing assembly for the compressor of a turbocharger of a combustion engine
Agencement de paliers pour le compresseur d'un turbocompresseur d'un moteur à combustion interne

(30) Priorität: 18.08.2010 DE 102010034766
(43) Veröffentlichungstag der Anmeldung: 22.02.2012
(73) Patentinhaber: Borgwarner Inc., Auburn Hills, Michigan 48326 (US)
(72) Erfinder: Celik, Halim, 50354 Hürth (DE); Hopp, Martin, 50858 Köln (DE); Bachmann, Kerstin, 10405 Berlin (DE); Seidel, Jawor, 52066 Aachen (DE)
(74) Vertreter: Peterreins Schley

(56) Entgegenhaltungen:
- DE-A1-102008 049 250
- FR-A1- 2 450 973
- JP-A- 2006 125 343
- US-A1- 2010 139 270

## Beschreibung

Die Erfindung betrifft eine Lageranordnung, gemäß Anspruch 1, für die Verdichterseite eines Turboladers einer Verbrennungskraftmaschine mit einer Welle, auf der ein Verdichterrad angeordnet ist und die durch ein Lagergehäuse hindurchtritt, wobei eine Dichtungsbüchse und ein Lagerbund auf der Welle angeordnet sind, wobei ein Axiallager fest im Lagergehäuse angeordnet ist, wobei der radial innere Bereich des Axiallagers zwischen einer sich radial erstreckenden Wand des Lagerbundes und einer sich radial erstreckenden Wand der Dichtungsbuchse angeordnet ist.

Derartige Lageranordnungen sollen sowohl eine verschleißarme Radial- als auch Axiallagerung gewährleisten, wobei Dichtungssysteme vorgesehen sind, die ein Eindringen von für die Schmierung der Turbolagerlagerungen notwendigem Öl in das Verdichtergehäuse und somit in den Kreislauf der Verbrennungskraftmaschine unterbinden sollen. Eine derartige Anordnung ist beispielsweise aus der DE 10 2008 049 250 A1 bekannt. Bei einer derartigen Anordnung werden die axialen Kräfte, die bei verschiedenen Betriebszuständen auf die Welle einwirken, durch die Dichtungsbuchse und den Lagerbund auf das Axiallager übertragen. Das fest im Lagergehäuse angeordnete Axiallager ist zur Aufnahme der Kräfte mit Keilflächen ausgeführt. Die Dichtungsbuchse und der Lagerbund dienen jeweils als eine Art Anlaufscheiben. Über eine Ölzuführungsbohrung wird die vom Verdichterrad wegweisende Seite des Axiallagers mit Öl versorgt. Dieses Öl wird über einen Spalt zwischen dem Axiallager und dem Lagerbund auch zur zum Verdichterrad hinweisenden Seite des Axiallagers geführt.

Die US2010139270A1 beschreibt eine Ölablassvorrichtung für einen Turbolader mit einem Lagerbund und einem den Lagerbund ringförmig umgebenden Einsatz. Der Lagerbund umfasst zwei sich radial nach außen erstreckende Wände, die einen ringförmigen Kanal bilden, in dem ein Axiallager angeordnet ist. Die DE102008049250A1 beschreibt ein Dichtungssystem mit einem Ölabweisblech, dessen äußerer Umfang zumindest teilweise zwischen dem Lagergehäusedeckel und dem Axiallager festgeklemmt ist und dessen Innenumfang in eine Radialnut am äußeren Umfang der sich radial erstreckenden Wand der Dichtungsbuchse ragt. Die JP2006125343A beschreibt einen Turbolader mit einem Gleitlager, das einen Hauptölzuführkanal und zwei in Schubrichtung davor und dahinter sitzende Nebenölzuführkanäle, die abhängig von der Schubrichtung zuschaltbar sind.

Bei einem Axialschub in Richtung Verdichter wird eine Schmierspaltverringerung zwischen Lagerbund und Axiallager zwangsläufig zu einer Schmierspaltvergrößerung zwischen Axiallager und Dichtungsbuchse führen. Damit kann durch den Spalt zwischen der Dichtungsbuchse und des Axiallagers eine wesentlich größere Ölmenge fließen, wodurch gerade auf der stark belasteten Seite des Axiallagers eine zu geringe Ölmenge zur Verfügung steht.

Es stellt sich daher die Aufgabe, eine Lageranordnung für die Verdichterseite eines Turboladers zu schaffen, die in jedem Betriebszustand eine ausreichende Ölmenge an der vom Verdichterrad wegweisenden Seite des Axiallagers zur Verfügung stellt.

Diese Aufgabe wird dadurch gelöst, dass die sich in axialer Richtung erstreckenden Flächen des Axiallagers und des Lagerbundes einander entsprechend stufenförmig ausgebildet sind, derart, dass die zum Lagerbund des Axiallagers gerichtete Fläche mindestens zwei sich axial erstreckende Flächen und mindestens eine sich radial erstreckende Fläche aufweist und die zum Axiallager des Lagerbundes gerichtete Fläche mindestens zwei sich axial erstreckende Flächen und mindestens eine sich radial erstreckende Fläche aufweist, die jeweils gegenüberliegend angeordnet sind. Auf diese Weise wird ein zusätzlicher sich in Radialrichtung erstreckender Spalt geschaffen, der zum Beispiel bei einem Axiaischub in Richtung des Verdichterrades ebenfalls wesentlich verringert wird, wodurch die in Richtung Verdichterradseite fließende Ölmenge wesentlich begrenzt wird.

In einer vorteilhaften Ausführungsform ist der Spalt zwischen dem Axiallager und der sich radial erstreckenden Wand des Lagerbundes kleiner gleich dem Spalt der sich radial erstreckenden Fläche des Axiallagers und der sich radial erstreckenden Fläche des Lagerbundes. Auf diese Weise ist eine besonders starke Begrenzung des Ölflusses zur Verdichterseite hin gewährleistet und es kann Mischreibung zwischen den Axialflächen des Axiallagers und des Lagerbundes vermieden werden. Dabei kann der Spalt sich radial erstreckenden Fläche des Axiallagers und sich radial erstreckenden Fläche des Lagerbundes im Bereich von 0,005 - 0,03 mm liegen.

Eine zusätzliche Verringerung des Ölflusses in Richtung des Verdichterrades kann dadurch erreicht werden, dass die sich axial erstreckenden Flächen des Axiallagers und des Lagerbundes angewinkelt in Richtung des Verdichterraumes verlaufen.

Ein Ausführungsbeispiel einer erfindungsgemäßen Lageranordnung für eine Verdichterseite eines Turboladers ist in der Zeichnung dargestellt und wird nachfolgend beschrieben.

Hierbei zeigt:

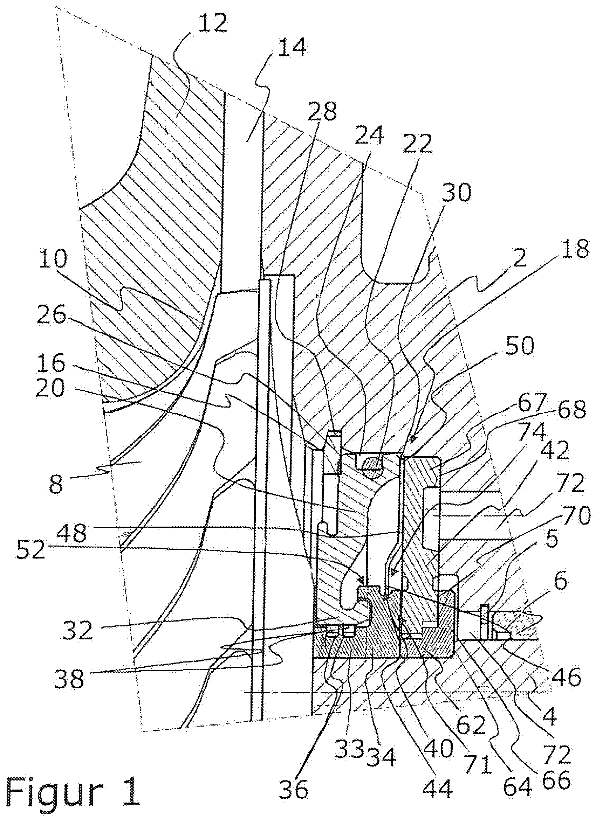

Figur 1 eine Seitenansicht eines Ausschnitts der Verdichterseite eines Turboladers mit der erfindungsgemäßen Lageranordnung in geschnittener Darstellung, und
Figur 2 einen vergrößerten Ausschnitt aus Figur 1.

Der dargestellte Turbolader besteht aus einer Lageranordnung 1 mit einem Lagergehäuse 2, in dem eine Welle 4 über zwei mit Sicherungsringen 5 in ihrer Position festgelegte Radiallager 6, von denen eines in der Figur zu erkennen ist, drehbar gelagert ist. An einem Ende der Welle 4 ist ein Verdichterrad 8 angeordnet. Am entgegengesetzten, nicht dargestellten Ende der Welle 4 ist ein Turbinenrad angeordnet.

Das Verdichterrad 8 ist in einem Verdichterraum 10 angeordnet und von einem Verdichtergehäuse 12 umgeben, in welchem ein nicht dargestellter axialer Einlass und ein tangentialer Auslass 14 in bekannter Weise ausgebildet sind. Das Verdichtergehäuse 12 wird beispielsweise über Spannbänder am Lagergehäuse 2 befestigt.

Das Lagergehäuse 2 der Lageranordnung 1 weist an seinem zum Verdichtergehäuse 12 weisenden Ende eine gestufte Bohrung 16 auf, in der ein Dichtungssystem 18 zur Vermeidung eines Eindringens von Öl in das Verdichtergehäuse 12 angeordnet ist.

Die Lageranordnung 1 weist desweiteren einen Lagergehäusedeckel 20 } auf, der in der Bohrung 16 unter Zwischenlage eines Dichtrings 22 in einer ringförmigen Radialnut 24, die am Außenumfang des Lagergehäusedeckels 20 ausgebildet ist, mittels eines Keilringes 26 befestigt ist. Der Keilring 26 wird in eine im Lagergehäuse 2 ausgebildete Innenumfangsnut 28 geklemmt und drückt auf diese Weise den Lagergehäusedeckel 20 über ein Ölabweisblech 48 und ein Axiallaber 42 gegen einen Absatz 30 des Lagergehäuses 2, wodurch der Lagergehäusedeckel 20 mit dem Ölabweisblech und dem Axiallager im Lagergehäuse 2 fixiert wird.

An seinem radial inneren Bereich ist am Lagergehäusedeckel 20 ein sich axial erstreckendender Ring 32 ausgebildet, der einen sich axial erstreckenden Bereich 33 einer Dichtungsbuchse 34 radial umgibt. Am Außenumfang des sich axial erstreckenden Bereiches 33 der Dichtungsbuchse 34 sind zwei ringförmige Radialnuten 36 ausgebildet, in denen jeweils ein Kolbenring 38 angeordnet ist, wobei unter ringförmiger Radialnut im Folgenden jeweils eine Nut zu verstehen ist, die in radialer Richtung ausgebildet ist und sich über einen Umfang erstreckt. Die Kolbenringe 38 dienen zur Abdichtung des Spaltes zwischen dem sich axial erstreckenden Ring 32 des Lagergehäusedeckels 20 und dem sich axial erstreckenden Bereich 33 der Dichtungsbuchse 34.

Die Dichtungsbuchse 34 ist fest auf der Welle 4 angeordnet und dreht sich mit dieser mit. An den sich axial erstreckenden Bereich der Dichtungsbuchse 34 schließt sich eine sich radial erstreckende Wand 40 der Dichtungsbuchse 34 an, deren erste axial begrenzende Wandfläche zum Lagergehäusedeckel 20 gewandt ist und deren zweite axial begrenzende Wandfläche zu dem Axiallager 42 gewandt ist. An einer Außenumfangsfläche 52 dieser sich radial erstreckenden Wand 40 ist eine Radialnut 44 ausgebildet, in die ein radialer Innenumfang 46 des Ölabweisblechs 48 ragt. Ein äußerer Umfang 50 des Ölabweisblechs 48 ist zwischen dem Lagergehäusedeckel 20 und dem Axiallager 42 festgeklemmt.

Die Dichtungsbuchse 34 liegt mit ihrem zum Verdichterrad 8 entgegengesetzten Ende gegen einen Lagerbund 60 an, der ebenfalls fest auf der Welle 4 angeordnet ist und mit dieser rotiert. Der Lagerbund 60 weist ebenfalls eine im Wesentlichen axiale Erstreckung 62 auf und liegt an seiner gegenüberliegenden Seite gegen einen Absatz 64 der Welle 4 an. In diesem Bereich weist der Lagerbund 60 eine sich radial erstreckende Wand 66 auf, so dass zwischen der Wand 66 des Lagerbundes 60 und der sich radial erstreckenden Wand 40 der Dichtungsbuchse 34 ein Zwischenraum entsteht, in weichem ein radial innerer Bereich 64 des Axiallagers 42 angeordnet ist. Dieses Axiallager 42 weist zu den sich radial erstreckenden Wänden 40, 66 weisende Schmierflächen auf, die eine Drehung des Lagerbundes 60 beziehungsweise der Dichtungsbuchse 34 gegenüber dem Axiallager 42 ermöglichen, welches mit seinem radial äußeren Bereich 67 zwischen dem Ölabweisblech 48 und einem Absatz 68 im Lagergehäuse 2 festgeklemmt ist. Zur Erzeugung der Schmierflächen sind geringfügige Spalten 70, 71 zwischen dem Axiallager 42 und den sich radial erstreckenden Wänden 40, 66 ausgebildet.

Über im Lagergehäuse 2 angeordnete Bohrungen 72 werden die Radiallager 6 sowie das Axiallager 42 mit Öl zur Schmierung der Lager 6, 42 versorgt. Dieses Öl gelangt über die Spalten 70, 71 durch den im Betrieb des Turboladers anstehenden Öldruck in einen Raum 74 zwischen dem Ölabweisblech 48 und dem Axiallager 42. In diesem Zusammenhang wir auch noch einmal ausdrücklich auf die DE 10 2008 049 250 verwiesen die das Dichtungssystem und seine Wirkung ausführlich beschreibt.

Wie schon angedeutet dient das Axiallager 42 dazu, die Axialkräfte aufzunehmen. Ein Axialschub in Richtung des Verdichters bei einer herkömmlichen Lageranordnung 1 kann nun dazu führen, dass der Spalt 71 vergößert wird und eine größere Ölmenge hierdurch strömen kann, währenddessen der Spalt 70 verkleinert wird, Dies ist jedoch nicht erwünscht, da auf der stark belasteten Seite, also im Spalt 70, eine größere Ölmenge benötigt wird, um einen ausreichenden Ölfilm auszubilden.

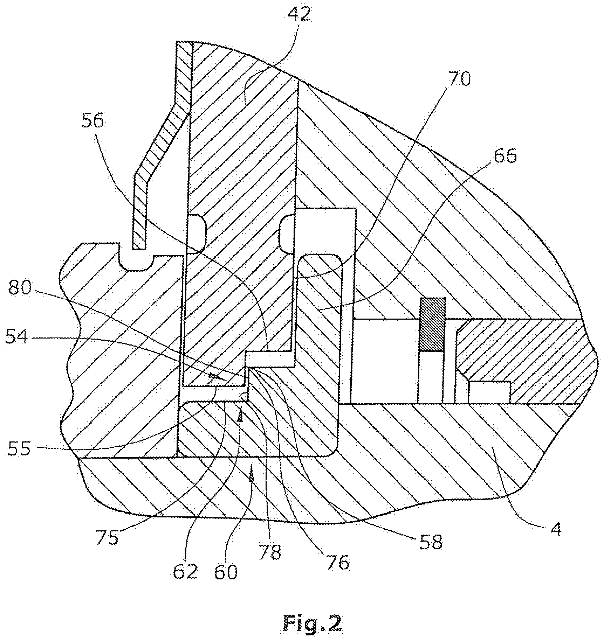

Um dies zu gewährleisten sind, wie der Figur 2 deutlich zu entnehmen ist, die sich in axialer Richtung erstreckenden Flächen 54, 62 des Axiallagers 42 und des Lagerbundes 60 einander entsprechend stufenförmig ausgebildet. Dies führt dazu, dass die zum Lagerbund 60 des Axiallagers 42 gerichtete Fläche 54 mindestens zwei sich axial erstreckende Flächen 55, 56 und mindestens eine sich radial erstreckende Fläche (58) aufweist und die zum Axiallager 42 des Lagerbundes 60 gerichtete Fläche 62 mindestens zwei sich axial erstreckende Flächen 75, 76 und mindestens eine sich radial erstreckende Fläche 78 aufweist, die jeweils gegenüberliegend angeordnet sind. Hierdurch wird im Wesentlichen ein dritter Spalt 80 geschaffen, der bei einem Axialschub in Richtung des Verdichterrades derart verengt wird, dass die Ölströmung verringert wird.

Insbesondere sollte der Spalt 70 zwischen dem Axiallager 42 und der sich radial erstreckenden Wand 66 des Lagerbundes 60 kleiner gleich dem Spalt 80 der sich radial erstreckenden Fläche 58 des Axiallagers 42 und der sich radial erstreckenden Fläche 78 des Lagerbundes 60 sein. Hierdurch wird verhindert, dass es zu einer Mischreibung des Materials von Lagerbund 60 und Axiallager 42 im Bereich des dritten Spaltes 80 kommt, der Spalt 80 zwischen der sich radial erstreckenden Fläche 58 des Axiallagers 42 und der sich radial erstreckenden Fläche 78 des Lagerbundes 60 im Bereich von 0,005 - 0,03 mm liegen.

Darüber hinaus ist es denkbar, dass die sich axial erstreckenden Flächen 55, 56; 75, 76 des Axiallagers 42 und des Lagerbundes 60 angewinkelt in Richtung des Verdichterraumes verlaufen.

Es sollte deutlich sein, dass geringfügige Änderungen innerhalb des Hauptanspruches denkbar sind. So kann beispielsweise die Teilung der Dichtungsbuchse und des Lagerbundes in anderer Weise erfolgen oder die Form der Innen- und Außenwände des Lagergehäusedeckels geändert werden,

## Patentansprüche

1. Lageranordnung für die Verdichterseite eines Turboladers einer Verbrennungskraftmaschine mit einer Welle (4), auf der ein Verdichterrad (8) angeordnet ist und die durch ein Lagergehäuse hindurchtritt, wobei die Lageranordnung eine Dichtungsbuchse (34) und einen Lagerbund (60) und ein Axiallager (42) umfasst, wobei die Dichtungsbuchse (34) und der Lagerbund (60) auf der Welle (4) angeordnet sind, wobei das Axiallager (42) fest im Lagergehäuse (2) angeordnet ist, wobei der radial innere Bereich des Axiallagers (42) zwischen einer sich radial erstreckenden Wand (66) des Lagerbundes (60), die sich auf einer vom Verdichterrad (8) wegweisenden Seite des Axiallagers (42) befindet, und einer sich radial erstreckenden Wand (40) der Dichtungsbuchse (34), die sich auf einer zum Verdichterrad (8) hinweisenden Seite des Axiallagers (42) befindet, angeordnet ist, wobei eine Ölzufuhr über Spalten (70) zwischen der sich radial erstreckenden Wand (66) und dem Axiallager (42) gewährleistet ist,
**dadurch gekennzeichnet, dass**
die sich in axialer Richtung erstreckenden Flächen (54, 62) des Axiallagers (42) und des Lagerbundes (60) einander entsprechend stufenförmig, in Radialrichtung zur Verdichterseite gerichtet absteigend ausgebildet sind, derart, dass die zum Lagerbund (60) des Axiallagers (42) gerichtete Fläche (54) mindestens zwei sich axial erstreckende Flächen (55, 56) und mindestens eine sich radial erstreckende Fläche (58) aufweist und die zum Axiallager (42) des Lagerbundes (60) gerichtete Fläche (62) mindestens zwei sich axial erstreckende Flächen (75, 76) und mindestens eine sich radial erstreckende Fläche (78) aufweist, die jeweils gegenüberliegend angeordnet sind.

2. Lageranordnung nach Anspruch 1, **dadurch gekennzeichnet, dass** der Spalt (70) zwischen dem Axiallager (42) und der sich radial erstreckenden Wand (66) des Lagerbundes (60) kleiner gleich einem Spalt (80) der sich radial erstreckenden Fläche (58) des Axiallagers (42) und der sich radial erstreckenden Fläche (78) des Lagerbundes (60) ist.

3. Lageranordnung nach Anspruch 2, **dadurch gekennzeichnet, dass** der Spalt (80) zwischen der sich radial erstreckenden Fläche (58) des Axiallagers (42) und der sich radial erstreckenden Fläche (78) des Lagerbundes (60) im Bereich von 0,005 - 0,03 mm liegt.

4. Lageranordnung nach einem der vorhergehenden Ansprüche, **dadurch gekennzeichnet, dass** die sich axial erstreckenden Flächen (55, 56; 75, 76) des Axiallagers (42) und des Lagerbundes (60) angewinkelt in Richtung des Verdichterraumes verlaufen.

## Claims

1. Bearing arrangement for the compressor side of a turbocharger of an internal combustion engine, having a shaft (4) on which a compressor wheel (8) is arranged and which extends through a bearing housing, wherein the bearing arrangement comprises a seal bushing (34) and a bearing collar (60) and an axial bearing (42), wherein the seal bushing (34) and the bearing collar (60) are arranged on the shaft (4), wherein the axial bearing (42) is arranged fixedly in the bearing housing (2), wherein the radially inner region of the axial bearing (42) is arranged between a radially extending wall (66) of the bearing collar (60), which wall is situated on a side of the axial bearing (42) averted from the compressor wheel (8), and a radially extending wall (40) of the seal bushing (34), which wall is situated on a side of the axial bearing (42) facing towards the compressor wheel (8), wherein a feed of oil is ensured via gaps (70) between the radially extending wall (66) and the axial bearing (42),
**characterized in that**
those surfaces (54, 62) of the axial bearing (42) and of the bearing collar (60) which extend in an axial direction are formed so as to be mutually correspondingly stepped downward in a radial direction towards the compressor side such that the surface (54) directed towards the bearing collar (60) of the axial bearing (42) has at least two axially extending surfaces (55, 56) and at least one radially extending surface (58), and the surface (62) directed towards the axial bearing (42) of the bearing collar (60) has at least two axially extending surfaces (75, 76) and at least one radially extending surface (78), which are arranged in each case opposite one another.

2. Bearing arrangement according to Claim 1, **characterized in that** the gap (70) between the axial bearing (42) and the radially extending wall (66) of the bearing collar (60) is smaller than or equal to a gap (80) of the radially extending surface (58) of the axial bearing (42) and the radially extending surface (78) of the bearing collar (60).

3. Bearing arrangement according to Claim 2, **characterized in that** the gap (80) between the radially extending surface (58) of the axial bearing (42) and the radially extending surface (78) of the bearing collar (60) lies in the range from 0.005 - 0.03 mm.

4. Bearing arrangement according to any of the preceding claims, **characterized in that** the axially extending surfaces (55, 56; 75, 76) of the axial bearing (42) and of the bearing collar (60) run so as to be angled in the direction of the compressor chamber.

## Revendications

1. Ensemble de palier pour le côté compresseur d'un turbocompresseur d'un moteur à combustion interne comprenant un arbre (4) sur lequel une roue de compresseur (8) est disposée, et lequel arbre traverse un logement de palier, l'ensemble de palier comportant une douille d'étanchéité (34), un collet de palier (60) et un palier axial (42), la douille d'étanchéité (34) et le collet de palier (60) étant disposés sur l'arbre (4), le palier axial (42) étant disposé de manière fixe dans le logement de palier (2), la région radialement intérieure du palier axial (42) étant disposée entre une paroi (66) s'étendant radialement du collet de palier (60), laquelle paroi se trouve sur un côté du palier axial (42) opposé à la roue de compresseur (8), et une paroi (40) s'étendent radialement de la douille d'étanchéité (34), laquelle paroi se trouve sur un côté du palier axial (42) tourné vers la roue de compresseur (8), une alimentation en huile étant assurée par le biais d'interstices (70) entre la paroi (66) s'étendant radialement et le palier axial (42),
**caractérisé en ce que**
les faces (54, 62), s'étendant dans la direction axiale, du palier axial (42) et du collet de palier (60) sont réalisées de manière correspondante l'une à l'autre en forme de gradin et de manière descendante de façon orientée vers le côté compresseur dans la direction radiale, de telle sorte que la face (54), orientée vers le collet de palier (60), du palier axial (42) comprend au moins deux faces (55, 56) s'étendant axialement et au moins une face (58) s'étendant radialement, et que la face (62), orientée vers le palier axial (42), du collet de palier (60) comprend au moins deux faces (75, 76) s'étendant axialement et au moins une face (78) s'étendant radialement, lesquelles sont disposées respectivement en regard.

2. Ensemble de palier selon la revendication 1, **caractérisé en ce que** l'interstice (70) entre le palier axial (42) et la paroi (66) s'étendant radialement du collet de palier (60) est inférieur ou égal à un interstice (80) entre la face (58) s'étendant radialement du palier axial (42) et la face (78) s'étendant radialement du collet de palier (60).

3. Ensemble de palier selon la revendication 2, **caractérisé en ce que** l'interstice (80) entre la face (58) s'étendant radialement du palier axial (42) et la face (78) s'étendant radialement du collet de palier (60) est compris dans la plage de 0,005 à 0,03 mm.

4. Ensemble de palier selon l'une des revendications précédentes, **caractérisé en ce que** les faces (55, 56 ; 75, 76) s'étendant axialement du palier axial (42) et du collet de palier (60) s'étendent de manière inclinée en direction de la chambre de compresseur.
